# EUROPEAN PATENT APPLICATION

(11) **EP 1 425 982 A1**
(43) Date of publication of application: **09.06.2004**
(21) Application number: 03027720.6
(22) Date of filing: 02.12.2003
(51) Int. Cl.: A44B 19/34, G02B 5/128

(54) **Reflective slide fastener and reflective tape**

(30) Priority: 04.12.2002 JP 2002352963
(71) Applicant: YKK CORPORATION, Chiyoda-ku, Tokyo (JP)
(72) Inventor: Imai, Shinji, Toyama-shi Toyama-ken (JP)
(74) Representative: Appelt, Christian W.

(57) **Abstract**

In a reflective slide fastener comprising a pair of fastener tapes (1), each fastener tape having a row of coupling elements (2) fixedly secured to and along a longitudinal edge of the fastener tape, and reflective materials (10) which exhibit retroreflection and are applied to the surfaces of the fastener tapes and/or coupling elements, the reflective materials are adapted to allow the color of the fastener tapes and/or coupling elements to be seen therethrough. The form of the reflective material includes a tape-like shape, a thread, and a thread-like shape formed from a tape. The preferred reflective material is a transparent or translucent retroreflective material containing a reflective layer (14) formed from a metal compound which has permeability to light.

## Description

### BACKGROUND OF THE INVENTION

### 1. Field of the Invention:

This invention relates to a reflective slide fastener and a reflective tape, and more particularly to a reflective slide fastener and a reflective tape which are adapted to allow the colors of the fastener tape and/or coupling elements of a slide fastener or various tapes to be seen through the tape attached thereto.

### 2. Description of the Prior Art:

Heretofore, as a reflective slide fastener and a reflective fastener tape, a slide fastener having narrow retroreflective tapes applied to the surfaces of the fastener tapes and/or coupling elements thereof and a fastener tape manufactured by inweaving or interknitting the narrow retroreflective tapes or the threads prepared therefrom are known in the art, and various products has been proposed till now (see Japanese Patent Publication No. 4-79242, and Japanese Patent Applications, KOKAI (Early Publication) No. 9-228205 and No. 10-295417, for example).

In the conventional reflective slide fastener, however, since colored retroreflective tapes exhibiting no permeability to light are applied to the surfaces of the fastener tapes and/or coupling elements, the color and pattern of the coupling elements or fastener tapes of the applied portions are hidden by the retroreflective tapes. This is because a reflective layer of the conventional retroreflective tape is formed by the deposition or plating of a metal such as aluminum, silver, and copper and has no permeability to light. In the case of the deposition of silver, for example, the reflective material has a silver color. Although it is so satisfactory when the color of the fastener tape is the same as or similar to this color, in the case of a different color, the presence of the reflective material is so discernible in appearance as to affect its design. Therefore, when the same color is required for a fastener tape or coupling elements and a retroreflective tape, it is necessary to manufacture the retroreflective tape while adjusting its color, which poses a problem that the manufacture of the tape takes a long time to complete. Moreover, for the fastener tapes and/or coupling elements of many colors, the retroreflective tapes having various colors should be prepared separately. In addition thereto, there is a difference in reflection luminance between the colors of the retroreflective fastener tapes. Such problems are also applicable to various tapes manufactured by inweaving or interknitting the retroreflective narrow tapes or threads in the tapes.

### SUMMARY OF THE INVENTION

It is, therefore, an object of the present invention to provide a reflective slide fastener and a reflective tape which allow the color or pattern of the coupling elements and/or fastener tape of a slide fastener or other article to be applied to be seen without discernible change under the conditions of the usual use (under the conditions of exposure to diffused light, such as sunlight) but exhibit the retroreflection when irradiated with light (under the conditions of retroreflection) and thus do not require to prepare the reflective materials of different colors elaborately adapted to fit varying colors of fastener tapes and coupling elements because they can fit the fastener tapes and coupling elements of varying colors with one reflective material.

To accomplish the object described above, a first aspect of the present invention provides a reflective slide fastener comprising a pair of fastener tapes, each fastener tape having a row of coupling elements fixedly secured to and along a longitudinal edge of the fastener tape, and reflective materials which exhibit retroreflection and are applied to the surfaces of the fastener tapes and/or coupling elements, characterized in that the reflective materials are adapted to allow the color of the fastener tapes and/or coupling elements to be seen therethrough.

Here, the reflective material which exhibits retroreflection is desired to be transparent or translucent and its form includes a tape-like shape, a thread, and a thread-like shape formed from a tape (hereinafter referred to collectively as "retroreflective material"). The mode of application thereof includes adhesion or lamination (by hot-melting), sewing, inweaving, and interknitting.

In accordance with a second aspect of the present invention, there is provided a reflective tape manufactured by inweaving, interknitting or incorporating in a tape a thread-like and/or tape-like reflective material which exhibits retroreflection, characterized in that the reflective material is adapted to allow the color of the tape to be seen therethrough.

Here, the reflective tape is prepared by inweaving, interknitting or incorporating the reflective material in a tape. Particularly preferred is a reflective fastener tape. The reflective fastener tape has various attachment-detachment means, stop means, engagement means, etc. Concrete examples of the reflective fastener tape include a surface fastener, a snap fastener with tape (as disclosed in Japanese Patent Application, Early Publication No. 11-318519, for example), a tape or cord for fastening, etc. besides the fastener tape for a slide fastener.

In accordance with a preferred embodiment, in either case mentioned above the reflective material is a transparent or translucent retroreflective material containing a reflective layer formed from a metal compound which has permeability to light, or a transparent or translucent retroreflective material containing a reflective layer formed from a metal compound which has permeability to light and a colored reflective layer containing a reflective pigment and being arranged under the reflective layer.

The reflective slide fastener and the reflective tape of the present invention are adapted to allow the color of the article to be applied, such as fastener tapes and coupling elements, to be seen therethrough and particularly use the transparent or translucent retroreflective material containing the reflective layer formed from a metal compound which has permeability to light. Therefore, they allow the color and pattern of the coupling elements or fastener tapes of a slide fastener, for example, to be seen without discernible change under the conditions of the usual use (under the conditions of exposure to diffused light, such as sunlight) but exhibit the retroreflection when irradiated with light (under the conditions of retroreflection).

In the retroreflective material of the preferred embodiment of the present invention further including the colored reflective layer which contains the reflective pigment and is arranged under the above-mentioned reflective layer, the reflective layer is formed from a metal compound which has permeability to light. Accordingly, when it is irradiated with light (under the conditions of retroreflection), part of the incident light from above is retroreflected by the reflective layer, and part of light which has passed through the reflective layer is further retroreflected in the opposite direction to the incident direction of the light by the reflective pigments contained in the colored reflective layer. Therefore, the satisfactorily high reflective luminance can be realized. Further, in the case of the colored retroreflective material provided with the colored reflective layer, since the color of the reflected light can be adjusted to a different color depending on the kind of pigment incorporated into the colored reflective layer, it is possible to adjust the color of the reflected light to a different color from that of the coupling elements or fastener tapes of a slide fastener. On the other hand, since the color and pattern of the coupling elements or fastener tapes of a slide fastener can be seen without discernible change under the conditions of the usual use (under the conditions of exposure to diffused light, such as sunlight), the colored retroreflective material will not impair the appearance of the slide fastener and enjoys excellent design.

Therefore, the reflective slide fastener and the reflective tape of the present invention do not require to prepare the reflective materials in various colors elaborately adapted to fit such varying colors of fastener tapes and/or coupling elements because they can fit fastener tapes and/or coupling elements of varying colors with one reflective material. They also fit fastener tapes and/or coupling elements having a design or a pattern depicted thereon beside a color and can be widely used in various applications.

### BRIEF DESCRIPTION OF THE DRAWINGS

Other objects, features, and advantages of the invention will become apparent from the following description taken together with the drawings, in which:
Fig. 1 is a fragmentary plan view schematically illustrating an embodiment of a reflective slide fastener of the present invention;
Fig. 2 is a fragmentary perspective view schematically illustrating another embodiment of a reflective slide fastener of the present invention;
Fig. 3 is a fragmentary plan view schematically illustrating yet another embodiment of a reflective slide fastener of the present invention;
Fig. 4 is a fragmentary enlarged cross-sectional view schematically illustrating an embodiment of the fundamental structure of a retroreflective material to be used in the present invention;
Fig. 5 is a fragmentary enlarged cross-sectional view schematically illustrating another embodiment of the fundamental structure of a retroreflective material to be used in the present invention;
Fig. 6 is a fragmentary enlarged cross-sectional view schematically illustrating yet another embodiment of the fundamental structure of a retroreflective material to be used in the present invention;
Fig. 7 is a fragmentary enlarged cross-sectional view schematically illustrating an embodiment of a colored retroreflective material to be used in the present invention;
Fig. 8 is a fragmentary enlarged cross-sectional view schematically illustrating another embodiment of a colored retroreflective material to be used in the present invention;
Fig. 9 is a fragmentary enlarged cross-sectional view schematically illustrating yet another embodiment of a colored retroreflective material to be used in the present invention;
Fig. 10 is a fragmentary enlarged cross-sectional view schematically illustrating a further embodiment of a colored retroreflective material to be used in the present invention;
Fig. 11 is a fragmentary enlarged cross-sectional view schematically illustrating a still further embodiment of a colored retroreflective material to be used in the present invention;
Fig. 12 is a fragmentary plan view schematically illustrating an embodiment of a reflective fastener tape of the present invention having narrow retroreflective tapes woven therein;
Fig. 13 is a fragmentary plan view schematically illustrating an embodiment of a warp-knit tape for a reflective slide fastener of the present invention having narrow retroreflective tapes knitted therein; and
Fig. 14 is a diagram illustrating a texture of a warp-knit tape for the reflective slide fastener shown in Fig. 13.

### DETAILED DESCRIPTION OF THE PREFERRED EMBODIMENTS

Now, the present invention will be described more concretely below by explaining the preferred embodiments shown in the accompanying drawings.

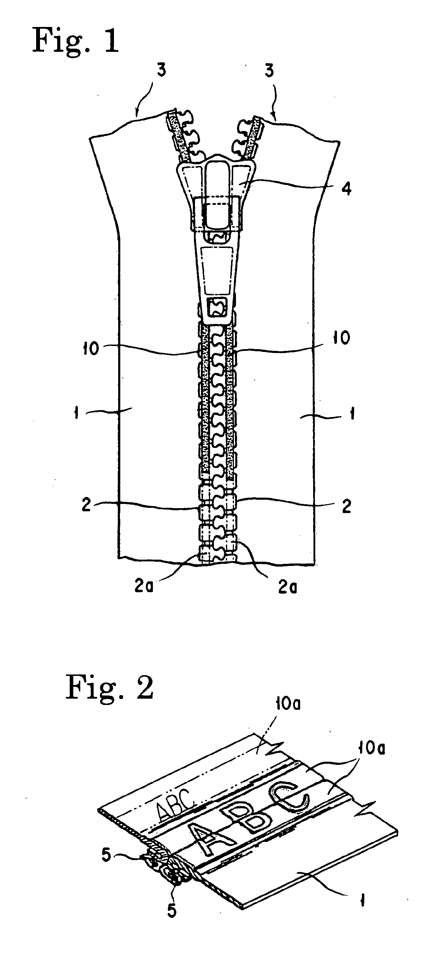

Fig. 1 shows an embodiment of a reflective slide fastener of the present invention which comprises a pair of stringers 3 each having a fastener tape 1 and a row of coupling elements 2 secured to and along a longitudinal inner edge of the fastener tape 1 at fixed intervals. The individual coupling elements 2 are formed by injection molding a synthetic resin material. A slider 4 is slidably mounted on the rows of coupling elements 2 for engaging and disengaging the coupling elements in a manner well known to open and close the fastener. A narrow retroreflective material (retroreflective tape) 10 is fixedly secured to the surfaces of each row of coupling elements 2 of this slide fastener in such a manner that it extends in the longitudinal direction of the fastener tape 1 over the coupling elements 2. The retroreflective tape 10 is fixedly secured to each row of coupling elements 2 by adhesion, welding or sewing so as to partially cover the upper surfaces of leg portions 2a of the coupling elements 2 and also extend between the leg portions 2a, 2a of the adjoining coupling elements 2. Incidentally, the retroreflective material 10 may be secured to the upper surface only of the leg portion 2a of the individual coupling elements 2 discretely. Needless to say, the coupling elements are not limited to those manufactured by injection molding a synthetic resin and may be those manufactured by extrusion molding a synthetic resin or by die-casting a metal material.

Fig. 2 shows another embodiment of the reflective slide fastener of the present invention. In this embodiment, coiled coupling elements 5 are attached to the inner longitudinal edges of the respective fastener tapes 1 and the right and left retroreflective tapes 10a, 10a are brought into contact to each other when the coiled coupling elements 5, 5 are meshed. This reflective slide fastener is constructed such that the retroreflective surface is formed substantially as a whole on the front surfaces of the areas of rows of coupling elements in the meshed state and allows the patterns in the surfaces of the fastener tapes to be seen therethrough. The retroreflective tape may be attached to the surface of the fastener tape other than the inner longitudinal edge thereof as shown by the imaginary lines.

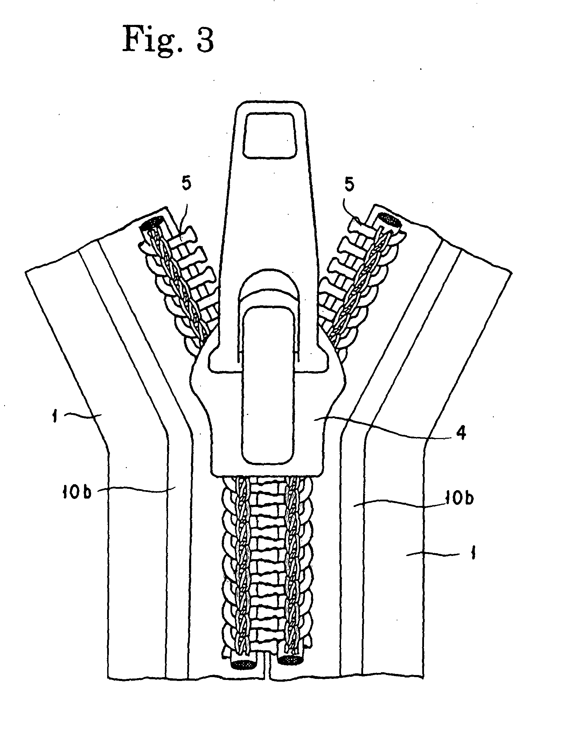

Fig. 3 shows yet another embodiment of the reflective slide fastener of the present invention. This embodiment is similar to the embodiment shown in Fig. 2 in that the coiled coupling elements 5 are attached to the inner longitudinal edges of the respective fastener tapes 1, but differs therefrom in that the retroreflective tapes 10 are respectively attached to a pair of fastener tapes 1 on both sides by adhesion or sewing in such a manner that they extend in the longitudinal direction in parallel to each other.

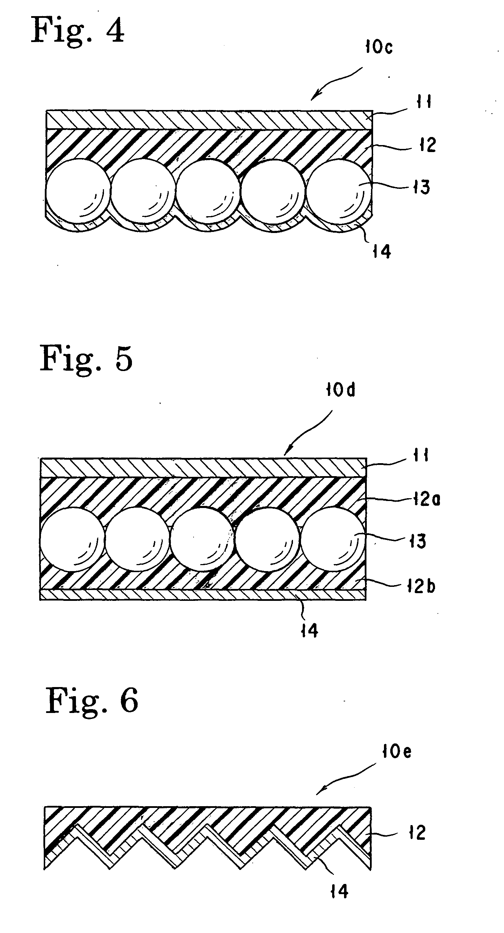

Next, some embodiments of the retroreflective material (retroreflective tape) mentioned above will be described with reference to Fig. 4 through Fig. 11.

Incidentally, for the sake of facilitating the explanation, Fig. 4 through Fig. 11 to be described hereinafter depict only a fragment of the retroreflective tape extending in the planar direction of the sheet in such a manner that spherical glass beads are arranged regularly without being cut and each layer has a uniform thickness in the planar direction of the layer extending. Practically, however, the spherical glass beads may be distributed at relatively random with some thickness, and the size of the spherical glass beads and the thickness of each layer are not necessarily illustrated in the exact proportion to the thickness of other layer etc. They may be illustrated in the increased thickness or reduced thickness for easy explanation.

Fig. 4 through Fig. 6 are fragmentary enlarged cross-sectional views schematically illustrating the fundamental structures of two embodiments of the retroreflective material to be used in the present invention.

The retroreflective material 10c shown in Fig. 4 comprises a base layer 11, a cover layer 12, spherical glass beads 13, and a reflective layer 14 superposed sequentially in the order mentioned from the upper part. The reflective layer 14 covers the underside surfaces of the spherical glass beads 13 (or the surface of the cover layer 12 in the gaps between adjoining spherical glass beads 13). That is, this retroreflective material is the type containing spherical glass beads directly covered with a reflective layer.

On the other hand, the retroreflective material 10d shown in Fig. 5 comprises a base layer 11, a cover layer 12a, spherical glass beads 13, a resin layer 12b, and a reflective layer 14 superposed sequentially in the order mentioned from the upper part.

The retroreflective material 10e shown in Fig. 6 comprises an embossed cover layer 12 and a reflective layer 14 superposed sequentially in the order mentioned from above, and the undersurface of the cover layer 12 is formed by embossing it into a multiple cubic shape.

The base layer 11 mentioned above is formed from a resin film, such as a PET (polyethylene terephthalate) film, paper, etc., and may be removed from the retroreflective material at the time of use.

The cover layers 12, 12a and the resin layer 12b mentioned above are made of a colorless and transparent resin such as, for example, polyurethane and polyvinyl chloride.

The reflective layer 14 mentioned above is made of a metal compound. It is desirable that the thickness of the reflective layer be in the approximate range of 300Å to 800Å in order to secure the balance of the required rate of reflection luminance and required transparency, preferably in the approximate range of 350Å to 500Å so that the sufficient rate of reflection luminance can be realized and the processing speed of the vacuum deposition or sputtering may be increased to shorten the processing time.

As the metal compound mentioned above, titanium oxide (TiO₂), bismuth oxide (Bi₂O₃), zirconium oxide (ZrO₂), silicon oxide (SiO₂), zinc oxide (ZnO), zinc sulfide (ZnS), etc. may be cited. These metal compounds are colorless, have high transparency, and allow processing for forming a thin reflective layer by vacuum deposition etc. Among other metal compounds, particularly titanium oxide is desirable from the viewpoint that it can be deposited in a controlled thickness of the layer by the sputtering process, and zinc oxide is desirable from the viewpoint that it allows the formation of a reflective layer more quickly and at a low cost.

Such retroreflective materials can be manufactured by the conventional manufacturing methods.

For example, in the case of the retroreflective material 10c shown in Fig. 4, polyurethane is applied to the upper surface (hereinafter explained by turning the arrangement shown in Fig. 4 upside down) of the base layer 11 to form the cover layer 12 thereon, the spherical glass beads 13 are spread on the cover layer, and the cover layer is heated to about 80°C to about 100°C so that the spherical glass beads 13 may be partially embedded in polyurethane (cover layer 12). After the cover layer 12 has cooled down and hardened, a metal compound such as titanium oxide is deposited on the hemisphere surfaces of the spherical glass beads 13 opposite to the portions embedded in the cover layer 12 to the extent of predetermined thickness, thereby forming the reflective layer 14 thereon.

In the case of the retroreflective material 10d shown in Fig. 5, after the lower portions of the spherical glass beads 13 are embedded in the cover layer 12a in the same way as mentioned above, a polyurethane resin is applied to the glass beads to form the resin layer 12b thereon. The thickness of the resin layer 12b is precisely controlled based on the focal distance of the spherical glass bead 13. Then, titanium oxide or the like is deposited on the upper surface of the resin layer 12b to the extent of predetermined thickness, thereby forming the reflective layer 14 thereon.

On the other hand, in the case of the retroreflective material 10e shown in Fig. 6, the cover layer 12 subjected to embossing by means of a micro-cube mold is firstly formed, and then a metal compound such as titanium oxide is deposited on the upper surface (undersurface in Fig. 6, the same holds good for the following description) of the cover layer, thereby forming the reflective layer 14 thereon.

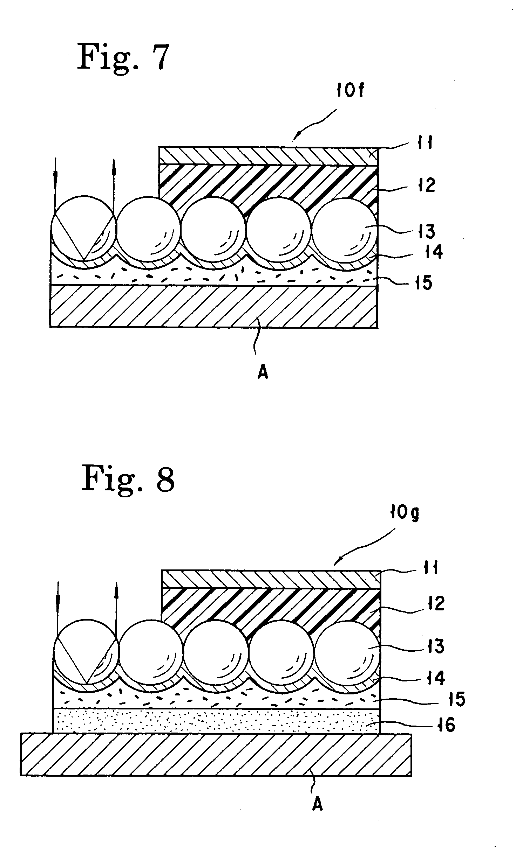

The retroreflective material to be used in the present invention may be provided with a patterned layer. If the patterned layer is transparent or translucent, since the pattern will be seen in the state that it is colored thinly with the color of the base material, it is possible to maintain the identity of color. Some examples of such colored retroreflective material are shown in Fig. 7 through Fig. 11.

A colored retroreflective material 10f shown in Fig. 7 comprises a base layer 11, a cover layer 12, spherical glass beads 13, a reflective layer 14, and a colored reflective layer 15 superposed sequentially in the order mentioned from the upper part. This colored retroreflective material is welded to an article "A" to be applied, such as coupling elements and fastener tapes. Incidentally, when the retroreflective material is not constructed as the colored retroreflective material, the colored reflective layer 15 may be formed as a colorless and transparent layer.

On the other hand, the colored retroreflective material 10g shown in Fig. 8 comprises a base layer 11, a cover layer 12, spherical glass beads 13, a reflective layer 14, a colored reflective layer 15, and an adhesive layer 16 superposed sequentially in the order mentioned from the upper part and this colored retroreflective material is adhered to an article "A" to be applied. Although the adhesive layer 16 is colorless and transparent, it may be colored unless its transparency is impaired.

The colored retroreflective material 10f shown in Fig. 7 has the colored reflective layer 15 laminated on the underside of the reflective layer 14, and the colored retroreflective material 10g shown in Fig. 8 has further the adhesive layer 16 applied to the colored reflective layer. Incidentally, the adhesive layer 16 has been covered with a release paper (not shown) prior to the application to the article.

The colored reflective layer 15 is made of a transparent resin containing a reflective pigment. As the reflective pigment, any pigments usually used for the conventional retroreflective tape may be used. As concrete examples thereof, mica, a pearl powder, a colored pearl powder, an aluminum powder, etc. may be cited. In proportion as the amount of the reflective pigment increases, the luminance of the colored retroreflective material naturally increases, but the fastness properties thereof may decrease conversely. Accordingly, the amount of the reflective pigment is preferred to be in the approximate range of 10 to 30% by weight, preferably about 20% by weight, of the total weight of the colored reflective layer, though depending on the kind of reflective pigment.

Further, the above-mentioned colored reflective layer may be made of a transparent resin containing a coloring pigment and/or a dye. For example, the colored reflective layer may be produced by coloring a transparent resin such as polyurethane, polyethylene, polyester, and silicone resin used as a base material with a coloring pigment and/or a dye and incorporating a reflective pigment thereinto. Although the dye and the coloring pigment are not restricted to the particular kinds insofar as they can color the base material, it is desirable to select the dyes and pigments of high transparency. As typical examples thereof, organic pigments such as isoindolinone, chlorinated copper phthalocyanine, phthalocyanine, disazo, and anthraquinone may be cited. The color of the colored reflective layer is substantially not restricted to a particular one and may be selected from all the colors including white, black, and also a metallic color. For example, the colored retroreflective material of high whiteness can be obtained by selecting a titanium oxide (TiO₂) powder as the coloring pigment. Particularly in the case of the inorganic pigment like the colored pearl pigment, the reflective pigment may be tinged with color.

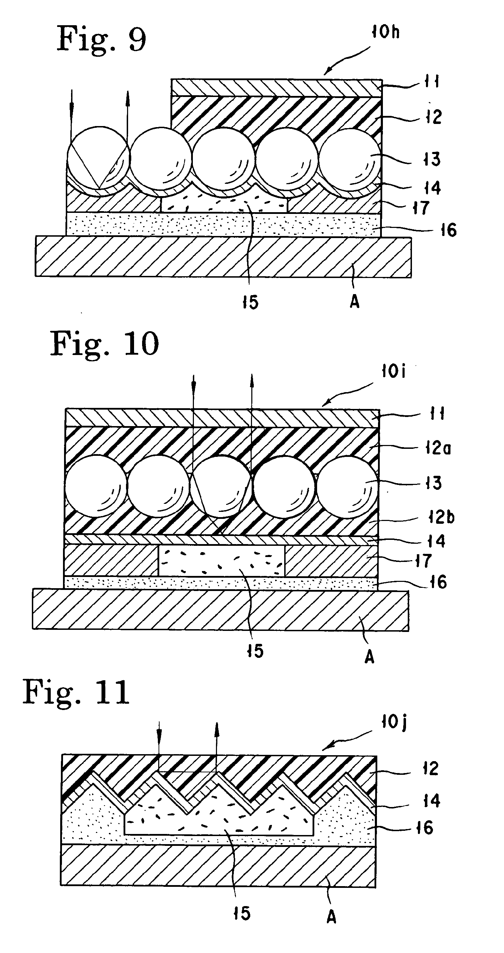

The colored retroreflective material 10h shown in Fig. 9 is a modification of the colored retroreflective material 10g shown in Fig. 8 mentioned above. It comprises a base layer 11, a cover layer 12a, spherical glass beads 13, a reflective layer 14, a colored reflective layer 15 in combination with a colored layer 17, and an adhesive layer 16 superposed sequentially in the order mentioned from the upper part and this colored retroreflective material is adhered to an article "A" (coupling elements, fastener tapes, etc.) to be applied. Incidentally, the adhesive layer 16 has been covered with a release paper (not shown) prior to the application to the article. The formation of the colored reflective layer 15 and the colored layer 17 may be performed by a conventional printing technique, such as offset printing, gravure printing, and silk screen printing. The colored reflective layer and/or the colored layer may also be a colorless and transparent layer or any layer having the other function, such as an adhesive layer.

The colored reflective layer 15 has a different color from the colored layer 17 and thus one can see the pattern under the conditions of diffused light. Further, since the colored reflective layer 15 contains a pearl pigment etc., the portion of the colored reflective layer 15 has a higher rate of retroreflection luminance as compared with that of the portion of the colored layer 17. Therefore, one can visually confirm the pattern also under the retroreflective conditions. Although in this embodiment the colored retroreflective material contains the colored layer 17 in addition to the colored reflective layer 15, it is needless to say that another colored reflective layer 15 of a different color may be formed in place of the colored layer 17 so that another pattern appears.

In the manufacture of the colored retroreflective material 10h shown in Fig. 9, the reflective material having the structure shown in Fig. 4 is firstly prepared, then the colored reflective layer 15 and the colored layer 17 are applied to the reflective layer 14 by a screen printing process, and the adhesive layer 16 and a release paper are further adhered thereon. In the case of the open type, the base layer 11 and the cover layer 12 are separated therefrom. At the time of use, the release paper is removed and the adhesive layer 16 is brought into close contact with the article "A" to be applied.

Incidentally, in the case of the colored retroreflective materials shown in Fig. 7 through Fig. 9 mentioned above, as the spherical glass beads 13 arranged under the cover layer 12, those having a refractive index of about 1.9 are selected. For example, a refractive index is 1.92 and a diameter is in the approximate range of 38-50 µm or 45-90 µm, for example. When the spherical glass bead 13 of this refractive index is used, a focal point is in agreement with the surface of the lower hemisphere of the spherical glass bead 13, as shown in Fig. 7 through Fig. 9.

In the colored retroreflective materials shown in Fig. 7 through Fig. 9 mentioned above, since the base layer 11, the cover layer 12, the spherical glass beads 13, and the reflective layer 14 are all transparent and further the colored reflective layer 15 and the colored layer 17 are also transparent or translucent though they are colored, the color and design of the article A (fastener elements, fastener tape, etc.) to be applied can be visually confirmed from above without discernible change under the conditions of diffused light. Under the conditions of retroreflection, the incident light from above is refracted as it passes through the spherical glass bead 13, part of the incident light is reflected at the upper surface of the reflective layer 14 lying under the spherical glass beads 13 and thus retroreflected at the same angle as that of incidence. Further, part of the light passes through the reflective layer 14 and reaches the colored reflective layer 15 (further the colored layer 17 in the case of the embodiment shown in Fig. 9). Part of the light which has reached the colored reflective layer 15 is reflected by the reflective pigment, such as a pearl pigment, and retroreflected through the spherical glass bead 13 again. Part of the light which has passed through the reflective layer 14 and reached the colored layer 17 diffuses in the colored layer and is absorbed thereby. Since the pattern formed by the colored reflective layer 15 and the colored layer 17 reflects the luminance of retroreflection as it is, the pattern formed can be visually confirmed even under the retroreflective conditions.

The colored retroreflective material 10i shown in Fig. 10 comprises a base layer 11, a cover layer 12a, spherical glass beads 13, a resin layer 12b, a reflective layer 14, a colored reflective layer 15 in combination with a colored layer 17, and an adhesive layer 16 superposed sequentially in the order mentioned from the upper part and this colored retroreflective material is adhered to an article "A" to be applied.

In this colored retroreflective material 10i, the glass bead of a refractive index of 2.2, for example, is used as the spherical glass bead 13 and, therefore, the focal point of the spherical glass bead 13 is at a position outside at a distant from the surface of the spherical glass bead 13. Therefore, under the retroreflective conditions, the incident light from above passes through the base layer 11 and the cover layer 12a, is refracted at the interface between the spherical glass beads 13 and the cover layer 12a and further refracted at the interface between the spherical glass beads 13 and the resin layer 12b, passes through the resin layer 12b, and reaches the upper surface of the flat reflective layer 14. Part of the light undergoes the specular reflection at the upper surface of the flat reflective layer 14, is reflected at the same angle as that of the incidence, passes through the resin layer 12b, the spherical glass bead 13, the cover layer 12a, and the base layer 11, and is retroreflected at the same angle as that of the incidence. Another part of the light passes through the reflective layer 14 and reaches the colored reflective layer 15 and the colored layer 17. Part of the light which has reached the colored reflective layer 15 is reflected by the reflective pigment contained in the colored reflective layer 15 and retroreflected by passing through the upper layers again. Part of the light which has reached the colored layer 17 diffuses in the colored layer and is absorbed thereby. The pattern formed by the colored reflective layer 15 and the colored layer 17 can be visually confirmed even under the retroreflective conditions owing to the difference in luminance thereof.

The colored retroreflective material 10j shown in Fig. 11 comprises a cover layer 12 having the undersurface embossed into a multiple cubic shape, a reflective layer 14, a colored reflective layer 15, and an adhesive layer 16, and this colored retroreflective material is adhered to an article "A" to be applied. The colored reflective layer 15 extends discontinuously in the planar direction. The underside of the colored reflective layer 15 is covered with the adhesive layer 16 so that the colored reflective layer 15 may not touch the article "A" to be applied. Although the adhesive layer 16 is colorless and transparent, it may be colored unless its transparency is impaired.

In the manufacture of this colored retroreflective material 10j, first the cover layer 12 is formed by subjecting to embossing by means of a micro-cube mold, and then a metal compound such as titanium oxide is deposited on the upper surface (undersurface in Fig. 11) of the cover layer, thereby forming the reflective layer 14 thereon. Further, the colored reflective layer 15 is partially printed on the upper surface of the reflective layer 14. Thereafter, the adhesive layer 16 is applied to the upper surfaces of the reflective layer 14 and the colored reflective layer 15, and the adhesive layer is covered with a release paper (not shown). The colored retroreflective material 10j is attached to the article "A" to be applied by removing the release paper and bonding the adhesive layer 16 onto the surface of the article "A".

In the colored retroreflective material 10j having the structure mentioned above, the color and design of the article A can be visually confirmed under the conditions of diffused light. Under the retroreflective conditions, part of the incident light from above undergoes the specular reflection at the reflective layer 14 and again undergoes the specular reflection at the reflective layer 14, and is retroreflected in the opposite direction to that of the incidence. Although part of the light passes through the reflective layer 14 in any case of reflection occurred twice, since part of the transmitted light is reflected by the colored reflective layer 15, part of the light is retroreflected in the opposite direction to that of the incidence.

The retroreflective materials as mentioned above may be formed into the shape of a narrow tape or thread by cutting the sheet-like material, or the retroreflective thread can be manufactured by twisting the narrow tape. Further, the colored reflective layer may also be colorless and can be subjected to the piece dyeing after the product such as a fabric and a twisted yarn is manufactured by cutting the material. If the fabric containing the conventional retroreflective tape using aluminum as the reflective layer is subjected to dyeing, relax processing, etc., the reflective performance will decrease because aluminum is attacked by acids and alkalis. On the contrary, since the reflective layer used in the present invention consists of a metal compound, it can considerably withstand the attack by acids and alkalis. The high degree of resistance to washing of clothing is also very important for the clothing provided with a slide fastener or a fastener tape using the retroreflective material.

Next, some embodiments of the woven or knitted fastener tapes prepared by using the retroreflective material (narrow tape or thread) will be described.

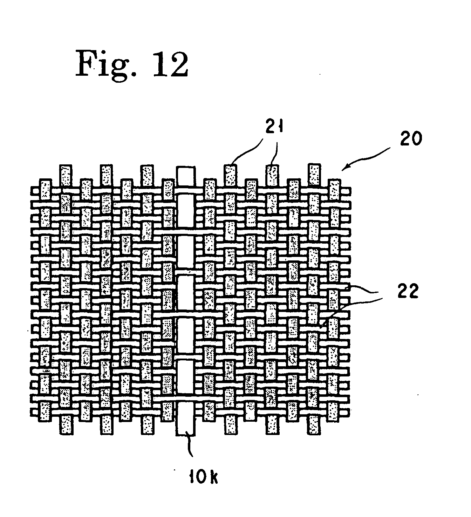

Fig. 12 shows a reflective fastener tape 20 having a narrow retroreflective tape woven therein. When warp yarns 21 and weft yarns 22 of a synthetic fiber such as polyamide and polyester are woven by means of a needle loom, the narrow retroreflective tape 10k is woven therein to form a reflective part. Incidentally, the reflective part may also be formed by inweaving a plurality of narrow retroreflective tapes arranged in parallel by the weft yarns at the intervals of several yarns, or by alternately weaving a plurality of narrow retroreflective tapes and warp yarns in the portion destined to be the reflective part.

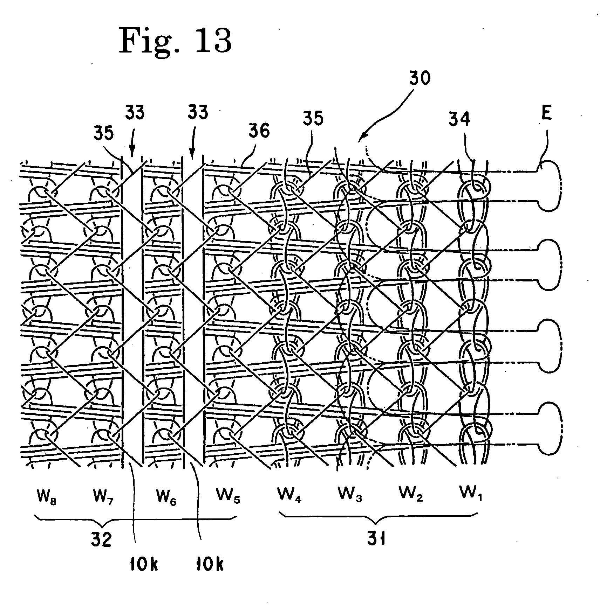

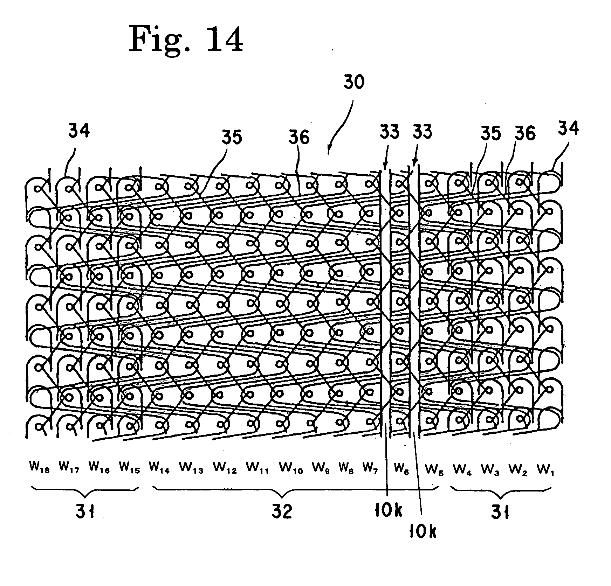

On the other hand, Fig. 13 and Fig. 14 show another reflective warp-knit tape 30, for a slide fastener, which has the narrow retroreflective tape knitted therein.

The reflective warp-knit tape 30 for a slide fastener according to this embodiment is a warp-knit tape composed of a plurality of kinds of warp-knit structures. The warp-knit tape comprises a mounting portion 31 to which the coupling elements "E" are attached as shown in Fig. 13 and other flexible main portion 32, and reflective portions 33 are knitted in the main portion 32 at several wales inwardly of the mounting portion 31.

The warp-knit tape 30 has the warp-knit structure as shown in Fig. 14, for example. The knitting yarns are the thermoplastic synthetic fiber yarns in the form of a monofilament or multifilament, such as polyamide and polyester. With each of all wales of W₁-W₁₈ of the warp-knit tape 30, a plurality of tricot-stitch yarns 35 having a knitting pattern of 1-2/1-0 and a plurality of weft-inlaid yarns 36 having a knitting pattern of 0-0/4-4 are interlooped or interlaced, and further in each of wales W₁-W₄, W₁₅-W₁₈, a chain-stitch yarn 34 is knitted in a pattern of 1-0/0-1, which fairly restrict the longitudinal stretchability of the knitted foundation. The coupling elements E are sewn with a sewing thread or the like onto this knitted foundation portion of which longitudinal stretchability is restricted.

The narrow retroreflective tapes 10k are arranged adjacent to each other and between the fifth and sixth adjacent wales W₅ - W₆ and between the sixth and seventh adjacent wales W₆ - W₇ of the warp-knit tape 30, respectively. The interknitting of the narrow retroreflective tapes is performed by arranging the weft-inlaid yarns 36 on the reverse side of the retroreflective tapes and the tricot-stitch yarns 35 on the obverse side thereof, thus sandwiching the retroreflective tapes 10k to form continuous reflective portions 33. The tricot-stitch yarns 35, which are exposed over the front surfaces of the retroreflective tapes, are thermoplastic synthetic fiber yarns of a transparent monofilament or multifilament. Alternatively, the material in the form of a suitable core cord or knitting yarn with a retroreflective tape wound around it may be used as the retroreflective material.

Although the preferred embodiments of the present invention has been described above, the present invention is not limited to the above-mentioned embodiments. The described embodiments are therefore to be considered in all respects as illustrative and not restrictive, the scope of the invention being indicated by the appended claims rather than by the foregoing description and all changes which come within the meaning and the range of equivalency of the claims are, therefore, intended to be embraced therein.
The features disclosed in the foregoing description, in the claims and/or the accompanying drawings may both, separately and in any combination thereof, be material for realising the invention in diverse forms thereof.

## Claims

1. A reflective slide fastener comprising:
a pair of fastener tapes each having a row of coupling elements fixedly secured to and along a longitudinal edge of the fastener tape, and
reflective materials which exhibit retroreflection and are applied to the surfaces of the fastener tapes and/or coupling elements,
**characterized in that** said reflective materials are adapted to allow the color of the fastener tapes and/or coupling elements to be seen therethrough.

2. The reflective slide fastener according to claim 1, wherein said reflective material is transparent or translucent.

3. The reflective slide fastener according to claim 1 or 2, wherein said reflective material is a transparent or translucent retroreflective material containing a reflective layer formed from a metal compound which has permeability to light.

4. The reflective slide fastener according to any one of claims 1 to 3, wherein said reflective material is a transparent or translucent retroreflective material containing a reflective layer formed from a metal compound which has permeability to light and a colored reflective layer containing a reflective pigment and being arranged under said reflective layer.

5. A reflective tape manufactured by inweaving, interknitting or incorporating in a tape a thread-like and/or tape-like reflective material which exhibits retroreflection,
**characterized in that** said reflective material is adapted to allow the color of the tape to be seen therethrough.

6. The reflective tape according to claim 5, wherein said reflective material is transparent or translucent.

7. The reflective tape according to claim 5 or 6, wherein said reflective tape is a transparent or translucent retroreflective material containing a reflective layer formed from a metal compound which has permeability to light.

8. The reflective tape according to any one of claims 5 to 7, wherein said reflective material is a transparent or translucent retroreflective material containing a reflective layer formed from a metal compound which has permeability to light and a colored reflective layer containing a reflective pigment and being arranged under the reflective layer.
